# FASCICULE DE BREVET EUROPEEN

(11) **EP 0 742 451 B1**
(45) Date de publication et mention de la délivrance du brevet: **08.08.2001**
(21) Numéro de dépôt: 96400986.4
(22) Date de dépôt: 09.05.1996
(51) Int. Cl.: G01T 1/185

(54) **Système de validation du signal de détection d'une chaîne de mesure à large bande de rayonnements nucléaires**
System zur Überwachung des Signals einer breitbandigen Messvorrichtung für Nuklearstrahlung
System for validating a detection signal from a measuring device sensitive to a broad band of nuclear radiations

(30) Priorité: 11.05.1995 FR 9505581
(43) Date de publication de la demande: 13.11.1996
(73) Titulaire: COMMISSARIAT A L'ENERGIE ATOMIQUE, 75015 Paris (FR)
(72) Inventeur: Barat, Eric, 75013 Paris (FR); Bourgerette, Alain, 91380 Chilly-Mazarin (FR); Trama, Jean-Christophe, 75013 Paris (FR)
(74) Mandataire: Dubois-Chabert, Guy

(56) Documents cités:
- EP-A- 0 263 386
- FR-A- 1 405 430
- GB-A- 1 050 306
- SIGNAL PROCESSING, vol. 18, no. 4, Décembre 1989, AMSTERDAM,NL, pages 349-369, XP002010323 BASSEVILLE,M: "distance measures for signal processing and pattern recognition"

## Description

### Domaine technique

La présente invention concerne un système de validation du signal de détection d'une chaîne de mesure à large bande, de rayonnements nucléaires. La validation du signal de détection est comprise comme la délivrance d'une information assurant avec un certain degré de confiance que la mesure effectuée est bonne, et que la chaîne instrumentale est dans un état de fonctionnement normal.

On entend par chaînes de mesure à "large bande" des chaînes de mesure dont la bande passante est suffisamment large pour ne pas déformer de façon importante les signaux de mesure délivrés. Ces chaînes ont typiquement une bande passante de quelques mégahertz.

Ainsi, le système de validation de l'invention concerne en particulier des chaînes du type chaîne de comptage en fluctuations et chaîne de comptage en impulsions.

L'invention peut être utilisée par exemple dans des chaînes de mesure pour des centrales nucléaires, des chaînes de spectrométrie des usines de traitement de produits radioactifs, mais aussi dans les domaines de la radioprotection ou de l'instrumentation de mesure de rayonnements en médecine nucléaire.

### Etat de la technique antérieure

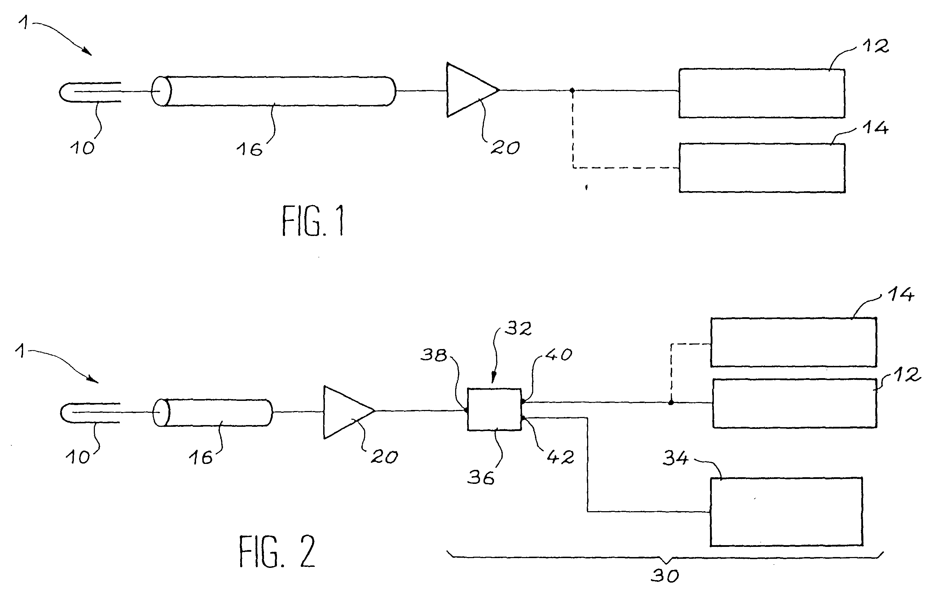

La figure 1 est une vue schématique d'une chaîne de mesure d'un type connu. La chaîne de mesure 1 comporte un détecteur 10, relié à une unité de traitement en impulsions 12 et/ou une unité de traitement en fluctuations 14 par l'intermédiaire d'un câble 16 adapté en impédance et d'un amplificateur 20 capable de transformer des impulsions en courant du signal fourni par le détecteur 10 en impulsions de tension. Le détecteur 10 est par exemple un compteur proportionnel capable de mesurer des flux de neutrons. Lorsque le flux de neutrons est faible, le signal du détecteur sera préférentiellement traité par une unité de traitement en impulsions. Lorsque le flux est plus important, par contre, on peut utiliser une unité de traitement en fluctuation du signal, une telle unité étant sensible aux variations quadratiques du signal.

Le contrôle du bon fonctionnement des chaînes de mesure et la validation des signaux délivrés sont actuellement effectués en utilisant différentes techniques.

On peut citer en ce qui concerne la partie instrumentale de la chaîne de mesure, par exemple, le contrôle des tensions d'alimentation des organes qui composent la chaîne, par exemple de l'amplificateur, le contrôle du branchement correct des câbles qui relient entre-eux ces organes, ou encore la vérification des seuils de comptage minimum et maximum de la chaîne (voir par example GB-A- 1 050 306).

Pour ce qui concerne les dispositifs électroniques de traitement des signaux de détection, on utilise des générateurs d'impulsions de test.

Dans certains cas, on procède régulièrement à des tracés de courbes caractéristiques des détecteurs des chaînes de comptage. A titre d'exemple, pour les chaînes de mesure de niveau source des centrales nucléaires, c'est-à-dire pour les chaînes de mesure effectuant des comptages à faible flux de rayonnement nucléaire, on trace des courbes dites de discrimination. Sur ces courbes on relève, de façon connue, la pente d'un palier de détection du ou des détecteurs. Si cette pente, exprimée en pour-cent, est en dehors d'un domaine de variation autorisé, le détecteur doit être changé.

Cette méthode a un caractère relativement empirique et ne permet pas de faire un diagnostic du défaut ou du dysfonctionnement constaté, ni de prévoir l'apparition de celui-ci.

De façon générale, il apparaît que, quelle que soit la méthode de validation du signal de la chaîne de mesure actuellement utilisée, cette validation nécessite l'inhibition ou l'arrêt momentané des mesures.

De plus, les contrôles effectués permettent difficilement de tenir compte du vieillissement des composants et de prévoir leur remplacement.

Un but de la présente invention est par conséquent de proposer un système de validation des signaux d'une chaîne de mesure de rayonnements qui ne présente pas les limitations et inconvénients mentionnés ci-dessus.

Un but est aussi de proposer un système de validation qui ne nécessite ni l'arrêt des mesures de rayonnement, ni l'arrêt des installations équipées de la chaîne de mesure.

Un autre but est de proposer un système capable de détecter d'éventuelles dégradation du capteur ou du détecteur de la chaîne de mesure et ce, avant même que les conséquences de ces dégradations sur la validité du signal ne soient trop importantes.

Un but enfin est de proposer un système capable, dans certains cas, de déterminer la cause ou la localisation du dysfonctionnement détecté.

### Exposé de l'invention

Pour atteindre ces buts, l'invention a pour objet un système de validation de signal d'une chaîne de mesure de rayonnements nucléaires comportant un détecteur de rayonnements, apte à délivrer un signal de détection de large bande spectrale à au moins une unité de traitement du signal, caractérisé en ce que le système de validation comporte des moyens de copie du signal de détection, et une unité de calcul, les moyens de copie étant aptes à délivrer une copie du signal de détection à l'unité de calcul, et l'unité de calcul étant apte à calculer une information spectrale de mesure représentative du spectre du signal de détection et à comparer l'information spectrale de mesure à une information spectrale de référence.

La comparaison de l'information spectrale à l'information de référence, stockée par exemple dans une mémoire, permet de conclure au bon ou mauvais fonctionnement de la chaîne de mesure. Cette comparaison a lieu simultanément au traitement du signal, c'est-à-dire sans interrompre les mesures.

Contrairement aux méthodes de validation connues qui se limitent à la surveillance de certains paramètres de la mesure, ou du taux de comptage, comme décrit ci-dessus, le système de l'invention utilisent pour la validation le signal lui-même pris dans son intégrité. En effet, la validation se fonde sur toute l'information que porte le signal, c'est-à-dire sur tout son spectre fréquentiel.

La comparaison entre l'information spectrale de mesure et l'information spectrale de référence peut, selon un aspect particulier de l'invention, être effectuée par le calcul d'une distance spectrale. La distance spectrale peut être comprise comme un écart entre les informations de mesure et de référence et est calculée selon un algorithme approprié.

Il existe plusieurs possibilités de calcul d'une distance spectrale. Pour plus de détail quant à ces calculs on peut se reporter aux enseignements du document (1) : "Distance measures for signal processing and pattern récognition", de Michèle Basseville, Signal Processing, V. 18, N°4, Décembre 89, pp. 349 à 369.

Selon un aspect particulier de l'invention, l'unité de calcul peut comporter un calculateur numérique d'une densité spectrale de puissance du signal de détection, la densité spectrale de puissance formant l'information spectrale de mesure.

Ainsi, la densité spectrale de puissance, exprimée en fonction de la fréquence est comparée à une densité spectrale de puissance de référence. Par exemple par calcul de la distance spectrale telle qu'évoquée ci-dessus.

La densité spectrale de puissance (DSP) d'un signal peut également être calculée de différentes manières : par exemple en prenant le carré du module de la transformée de Fourier du signal mesuré.

La DSP peut aussi être reconstruite selon un modèle de type ARMA.

Ceci consiste en la modélisation du signal par un modèle paramétrique qui dépend d'un nombre fini de paramètres.

La comparaison peut alors être effectuée entre l'information spectrale de la fonction modélisée et l'information spectrale de référence.

Pour plus de précisions concernant les modèles paramétriques et notamment le modèle du type ARMA, on peut se référer au document (2) : "Spectrum Analysis A modem perspective" de S.M. Kay et S.L. Marple, Journal Proceedings of the IEEE, vol. 69, N° 11, November 1981, pp. 1380-1414.

Selon une réalisation particulière du système de l'invention, les moyens de copie du signal peuvent comporter un amplificateur inséré dans la chaîne de mesure, en amont de l'unité de traitement du signal. L'amplificateur comporte, par exemple, une entrée reliée au détecteur, une première sortie reliée à l'unité de traitement et une deuxième sortie reliée à l'unité de calcul. La première et la deuxième sorties de l'amplificateur délivrent chacune un signal identique au signal appliqué à l'entrée de l'amplificateur.

D'autres caractéristiques et avantages de la présente invention ressortiront mieux de la description qui va suivre, donnée à titre purement illustratif et non limitatif, en référence aux dessins annexés.

### Brève description des figures

- la figure 1, déjà décrite, est une vue schématique d'une chaîne de mesure en impulsion-fluctuation de type connu,
- la figure 2 est une vue schématique d'un premier exemple de chaîne de mesure équipée d'un système de validation conforme à la présente invention,
- la figure 3 est une vue schématique d'un second exemple de chaîne de mesure équipée du système de validation conforme à la présente invention,
- la figure 4 est une représentation graphique d'un exemple d'une densité spectrale de puissance d'un signal, utilisée pour sa validation.

### Description détaillée de modes de mise en oeuvre de l'invention

Pour l'ensemble des figures décrites, les éléments identiques ou similaires portent respectivement les mêmes références.

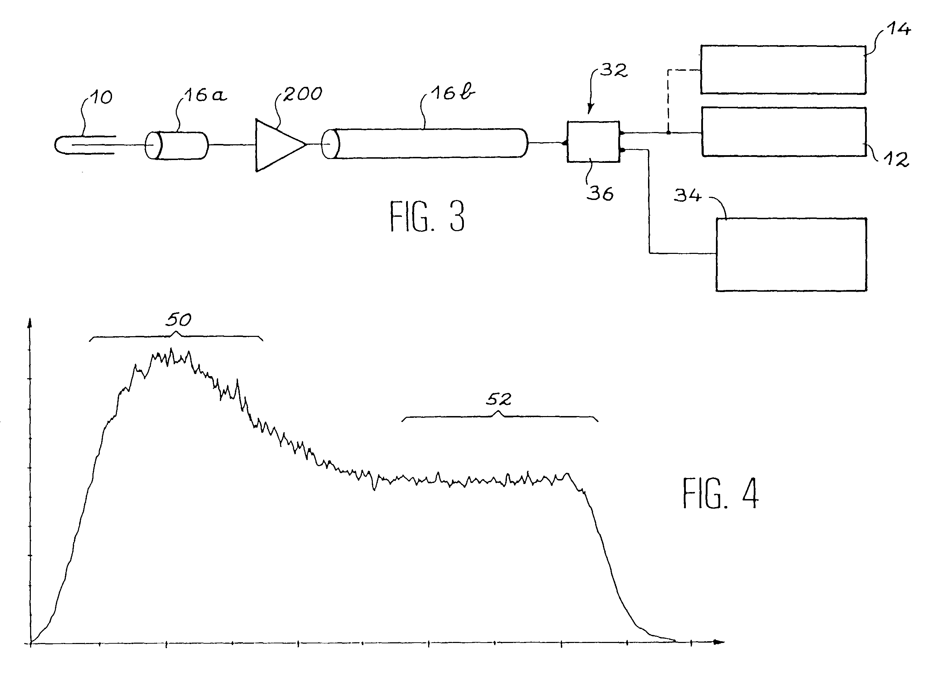

On retrouve ainsi sur la figure 2 un détecteur 10 relié à une unité de traitement en impulsions 12 et/ou une unité de traitement en fluctuation 14, d'un type connu, par l'intermédiaire d'un câble 16 et d'un amplificateur 20 de mise en forme du signal.

La chaîne de mesure 1 est équipée d'un système de validation 30 conforme à l'invention.

Ce système 30 comporte des moyens 32 de copie du signal de mesure pour diriger une copie du signal vers une unité de calcul 34.

Les moyens 32 comportent un amplificateur 36 avec une entrée 38 adaptée en impédance à la sortie de l'amplificateur 20. L'amplificateur 36 comporte une double sortie en collecteur commun. Une première sortie 40 est reliée aux unités 12 et/ou 14 tandis qu'une deuxième sortie 42 est reliée à l'unité de calcul 34. Les sorties 40, 42 présentent des impédances adaptées par rapport aux unités 12, 14 et 34, l'impédance d'entrée et les impédances de sortie étant typiquement de 50 Ω. Les sorties 40 et 42 délivrent aux unités de traitement 12 et/ou 14 ainsi qu'à l'unité de calcul 34 du système de validation un signal identique au signal reçu sur l'entrée 38.

Ainsi, le système de validation est "transparent" par rapport à la chaîne de mesure, c'est-à-dire que les unités 12, 14 de traitement reçoivent exactement le même signal que celui qui leur serait fourni dans une configuration telle que décrite à la figure 1.

Les unités de traitement en impulsions 12 et en fluctuation 14 peuvent comporter respectivement des moyens de discrimination en amplitude (mesure en impulsions) ou un sélecteur de bande passante (mesure en fluctuations). Ces dispositifs sont cependant disposés sur la chaîne de mesure après les moyens de copie du signal, c'est-à-dire après la prise de l'information pour le système de validation.

Une chaîne de mesure équipée du système de validation conformément à la figure 2 est particulièrement adaptée aux conditions de mesure dans lesquelles il est nécessaire d'éloigner des dispositifs électroniques des unités de traitement et du système de validation. Ceci est le cas par exemple des chaînes de mesure sur des réacteurs à eau pressurisée dans lesquels on prévoit des liaisons par câble 16 qui peuvent atteindre des longueurs de 100 à 200 mètres.

Un autre exemple de chaîne de mesure équipée du système de validation conforme à l'invention est représenté à la figure 3.

Sur cette figure, les éléments identiques ou similaires à ceux des figures 1 et 2 portent les mêmes références et on peut se reporter à la description qui précède.

Toutefois, on peut noter la présence de deux portions 16a et 16b de câble dont la portion 16b est adaptée en impédance réalisant la liaison entre le détecteur 10 et les moyens 32 de copie du signal. Les portions 16a et 16b relient respectivement le détecteur 10 à l'entrée d'un amplificateur 200 et la sortie de l'amplificateur 200 à l'entrée des moyens 32 de copie du signal.

L'amplificateur 200 est un amplificateur dit de charges. Il se distingue de l'amplificateur de courant 20 de la figure 2 en ce qu'il effectue directement une intégration des charges délivrées par le détecteur 10 pour fournir aux unités de traitement un signal formé par des impulsions de tension.

Une chaîne de mesure conforme à la figure 3 présente l'avantage de fournir un signal avec un meilleur rapport de signal sur bruit qu'une chaîne conforme à la figure 2. Cependant, la longueur de câble utilisable entre le détecteur et l'amplificateur est beaucoup plus faible ; elle est de l'ordre de 10 m à 30 m. L'amplificateur 200 de la figure 3 doit donc être disposé plus près du détecteur que l'amplificateur 20 de la figure 2. Ceci explique la présence des deux tronçons de câble 16a et 16b de la figure 3.

Il apparaît que le système de validation de l'invention est utilisable quelle que soit la configuration de la chaîne de mesure.

La figure 4 permet de mieux comprendre les possibilités offertes par l'invention pour déterminer la validité d'un signal reçu mais aussi de diagnostiquer un éventuel dysfonctionnement ou une fatigue de la chaîne de mesure.

Rappelons que le mécanisme de création du signal dans le détecteur peut être expliqué comme suit. La particule à détecter provoque, directement ou indirectement dans un espace inter-électrode du détecteur, l'apparition de paires de porteurs de charge (électrons-ions positifs ou électrons-trous). Au cours de leurs parcours dans cet espace, sous l'action de la différence de potentiel appliquée entre les électrodes du détecteur, ces particules chargées induisent le signal électrique de mesure. La collection des charges est fondamentale puisqu'elle est à l'origine du signal utile. Or, pour avoir une bonne description du phénomène physique mesuré, il faut donc disposer de toute la bande de fréquences du signal.

Dans le cas des chaînes source des réacteurs à eau pressurisée d'EDF, les détecteurs utilisés sont des compteurs proportionnels destinés à mesurer des flux de neutrons, compris typiquement entre 0 et 10⁵ neutrons par seconde. Le détecteur comporte une couche de matériau fissile qui peut interagir avec les neutrons incidents pour créer deux produits de fission, c'est-à-dire des paires électrons-ions, qui ionisent un gaz entre les électrodes du détecteur et produisent un signal selon le principe décrit ci-dessus.

La figure 4 représente une courbe de densité spectrale de puissance d'un signal détecté selon le principe décrit ci-dessus. La densité de puissance reportée en ordonnées et la fréquence, reportée en abscisses, sont exprimées en échelles arbitraires. La densité spectrale de puissance est un excellent indicateur de la validité de mesure du signal. En effet, si le détecteur présente une anomalie de fonctionnement, nuisible à la mesure, le processus de collection de charge en est affecté. Or, la collection des charges a des conséquences directes sur la densité spectrale de puissance. Le suivi en ligne de la densité spectrale de puissance permet, comme expliqué ci-dessous, de détecter les changements dans le phénomène physique de collection des charges.

On rappelle que les électrons des paires de porteurs électrons-ions créés dans le détecteur ont une vitesse de plusieurs ordres de grandeur (entre 2 et 3) supérieure à celle des ions. Ils sont donc à l'origine d'un signal temporel bien plus rapide que le signal ionique. Si l'on considère la densité spectrale de puissance (DSP) du signal total (électronique plus ionique), c'est-à-dire la répartition fréquentielle de son énergie, le signal électronique rapide aura des composantes de haute fréquence, alors que le signal ionique plus lent n'aura que des composantes basses fréquences.

Sur la figure 4, la référence 50 correspond aux composantes de basses fréquences, c'est-à-dire au signal dit ionique tandis que la référence 52 correspond aux composantes de hautes fréquences, c'est-à-dire au signal électronique.

Un exemple particulier de panne de détecteur permet d'illustrer l'influence du changement dans le phénomène physique de collection des charges sur la courbe de densité spectrale de puissance. L'exemple concerne l'intrusion d'oxygène dans le détecteur qui est fréquemment à l'origine des pannes de détecteurs, notamment dans les réacteurs de centrales électriques.

La molécule d'oxygène, très électronégative a tendance à attacher des électrons, c'est-à-dire à les capturer, ce qui conduit le porteur de charge négative, précédemment électron, à devenir un ion négatif. L'ion négatif ayant une vitesse de migration dans un champ électrique bien plus lente que l'électron, on assiste à une diminution du signal haute fréquence 52 (dû aux électrons) et à une augmentation du signal ionique basse fréquence 50. Le phénomène d'attachement étant très efficace dès qu'un peu d'oxygène est présent dans un détecteur, les modifications qui en résultent sur la densité spectrale de puissance sont très rapidement visibles.

La comparaison de la courbe densité spectrale de puissance à une courbe de référence permet ainsi non seulement de valider ou non le signal, mais permet aussi, le cas échéant, d'avoir un renseignement sur la cause d'une panne, ou sur l'état du détecteur.

## Revendications

1. Système de validation de signal d'une chaîne de mesure de rayonnements nucléaires (1) comportant un détecteur (10) de rayonnements, apte à délivrer un signal de détection de large bande spectrale à au moins une unité (12, 14) de traitement du signal, caractérisé en ce que le système de validation (30) comporte des moyens de copie (32) du signal de détection et une unité de calcul (34), les moyens de copie étant aptes à délivrer une copie du signal de détection à l'unité de calcul (34) et l'unité de calcul (34) étant apte à calculer une information spectrale de mesure représentative du spectre du signal de détection et à comparer l'information spectrale de mesure à une information spectrale de référence.

2. Système selon la revendication 1, caractérisé en ce que l'unité de calcul (34) comporte un calculateur numérique permettant de calculer une distance spectrale entre l'information spectrale de mesure et l'information spectrale de référence.

3. Système selon la revendication 1, caractérisé en ce que l'unité de calcul (34) comporte un calculateur numérique permettant de calculer une densité spectrale de puissance du signal de détection, la densité spectrale de puissance formant l'information spectrale de mesure.

4. Système selon la revendication 3, caractérisé en ce que l'information spectrale comporte des paramètres calculés selon un modèle paramétrique du type ARMA du signal de rayonnement mesuré.

5. Système selon la revendication 1, caractérisé en ce que les moyens de copie du signal (32) de détection comportent un amplificateur (36) inséré dans la chaîne de mesure en amont de l'unité de traitement du signal, l'amplificateur (36) comportant une entrée (38) reliée au détecteur (10), une première sortie (40) reliée à l'unité de traitement et une deuxième sortie (42) reliée à l'unité de calcul (34), la première et la deuxième sorties de l'amplificateur délivrant chacune un signal identique au signal appliqué à l'entrée de l'amplificateur.

6. Système selon la revendication 5, caractérisé en ce que la chaîne de mesure (1) comporte en outre un amplificateur (20, 200) de mise en forme du signal de détection, disposé en amont des moyens de copie.

## Patentansprüche

1. System zur Überwachung des Signals einer Messkette für Nuklearstrahlung (1) mit einem Strahlungsdetektor (10), fähig ein Detektionssignal mit breitem Spektralband an wenigstens eine Signalverarbeitungseinheit (12, 14) zu liefern,
**dadurch gekennzeichnet,**
dass das Überwachungssystem (30) Kopiereinrichtungen (32) des Detektionssignals und eine Recheneinheit (34) umfasst, wobei die Kopiereinrichtungen fähig sind, eine Kopie des Detektionssignals an die Recheneinheit (34) zu liefern, und die Recheneinheit (34) fähig ist, eine für das Spektrum des Detektionssignals repräsentative Spektralmessinformation zu berechnen und die Spektralmessinformation mit einer Spektralbezugsinformation zu vergleichen.

2. System nach Anspruch 1, dadurch gekennzeichnet, dass die Recheneinheit (34) einen Digitalrechner umfasst, der ermöglicht, einen spektralen Abstand zwischen der Spektralmessinformation und der Spektralbezugsinformation zu berechnen.

3. System nach Anspruch 1, dadurch gekennzeichnet, dass die Recheneinheit (34) einen Digitalrechner umfasst, der ermöglicht, eine spektrale Leistungsdichte des Detektionssignals zu berechnen, wobei die spektrale Leistungsdichte die Spektralmessinformation bildet.

4. System nach Anspruch 3, dadurch gekennzeichnet, dass die Spektralinformation Parameter des gemessenen Strahlungssignals umfasst, berechnet nach einem parametrischen Modell des Typs ARMA.

5. System nach Anspruch 1, dadurch gekennzeichnet, dass die Kopiereinrichtungen des Detektionssignals (32) einen Verstärker (36) umfassen, der vor der genannten Signalverarbeitungseinheit in die Messkette eingefügt ist, wobei dieser Verstärker (36) einen Eingang (38), verbunden mit dem Detektor (10), einen ersten Ausgang (40), verbunden mit der Verarbeitungseinheit, und einen zweiten Ausgang (42), verbunden mit der Recheneinheit (34), umfasst und der erste und der zweite Ausgang des Verstärkers jeweils ein Signal liefern, das mit dem in den Eingang des Verstärkers eingespeisten Signal identisch ist.

6. System nach Anspruch 5, dadurch gekennzeichnet, dass die Messkette (1) außerdem einen Verstärker (20, 200) zur Formung des Detektionssignals umfasst, angeordnet vor den Kopiereinrichtungen.

## Claims

1. System for validating the signal of a nuclear radiation measuring chain (1) having a radiation detector (10) able to deliver a wide spectral band detection signal to at least one signal processing unit (12, 14), characterized in that the validation system (30) comprises means (32) for copying the detection signal and a calculation unit (34), the copying means being able to deliver a copy of the detection signal to the calculation unit (34) and the calculation unit (34) being able to calculate spectral measuring information representative of the spectrum of the detection signal and compare the spectral measuring information with reference spectral information.

2. System according to claim 1, characterized in that the calculation unit (34) comprises a digital computer able to calculate a spectral distance between the spectral measuring information and the reference spectral information.

3. System according to claim 1, characterized in that the calculation unit (34) comprises a digital computer able to calculate a power spectral density of the detection signal, said power spectral density forming the spectral measuring information.

4. System according to claim 3, characterized in that the spectral information comprises parameters calculated according to an ARMA type parametric model of the measured radiation signal.

5. System according to claim 1, characterized in that the detection signal copying means (32) comprise an amplifier (36) inserted in the measuring chain upstream of the signal processing unit, the amplifier (36) comprising an input (38) connected to the detector (10), one first output (40) connected to the processing unit and a second output (42) connected to the calculation unit (34), the first and second outputs of the amplifier each delivering a signal identical to the signal applied to the input of the amplifier.

6. System according to claim 5, characterized in that the measuring chain 91) further comprises an amplifier (20, 200) for shaping the detection signal disposed upstream of the copying means.
